# EUROPEAN PATENT APPLICATION

(11) **EP 1 418 741 A2**
(43) Date of publication of application: **12.05.2004**
(21) Application number: 03025091.4
(22) Date of filing: 03.11.2003
(51) Int. Cl.: H04M 3/51, H04M 7/00, H04M 3/38, H04L 12/24

(54) **Method and apparatus for providing real-time communication center statistical data to a third-party application over a data network**

(30) Priority: 06.11.2002 US 289581
(71) Applicant: Genesys Telecommunications Laboratories, Inc., Daly City, CA 94014 (US)
(72) Inventor: Makagon, Petr, San Francisco, CA 94103 (US); Ryabchun, Andriy, San Francisco, CA 94121 (US); Anisimov, Nikolay, Concord, CA 94521 (US)
(74) Representative: Dreiss, Fuhlendorf, Steimle & Becker

(57) **Abstract**

A system for providing communication-center statistical data to a third party application over a data network includes an intermediate service point connected to the network between the communication-center environment and the third-party application; a set of application program interfaces for transforming and transmitting communication-center statistical data from the center to the intermediate service point; and a set of application program interfaces for transmitting the communication-center statistical data from the service point to the third-party application. In a preferred embodiment the third-party application accesses the intermediate service point using the network and manipulates one or more services hosted within the service point to configure to receive by subscription statistical data about specific communication-center entities described as objects including real time performance statistics of those entities.

## Description

### Field of the Invention

The present invention is in the field of telephony communication and pertains more particularly to methods and apparatus that enable third-party created software applications to have access to real-time report data relevant to a communication center environment, such access available over a data network from a physically remote network location.

### Background of the Invention

Modern communication centers are becoming multimedia capable and often service both analog and various forms of digital media interactions. In order to service a large public client base, state-of-art telecommunications equipment, software applications, and various dedicated servers are compiled and integrated with state-of-art software platforms. In addition to managing very high levels of communication events of various media types, internal management duties must be performed within the center itself. Such duties include tracking and managing historical data, client data, product data, service personnel data, and center configuration data. Moreover, many communication center hosts have multiple service sites that are connected through networks both analog and digital.

The inventors know of an object-oriented, communication-center management system that is currently used within some centers. The system provides tools for client/agent interaction management, intelligent routing, historical database reporting, statistics compilation and reporting, communication event load balancing, and configuration management. Parts of the system are distributed, for example, to agent desktop terminals for contact management. Servers are provided to facilitate different media types such as chat, e-mail, and so on. Parts of the system are distributed to telephony switches to provide intelligent routing and client interaction capability both from within the system and in some cases into the event sponsoring networks. The system is automated in many respects and updates to configuration parameters of the system are made periodically to add new equipment, reconfigure agent desktop applications, re-assign personnel to various duties, configure local telephony switches for agent level routing, and other duties.

Due to an extraordinary large number of distributed components and software applications, configuration parameters that must be tracked and managed are quite numerous. The above-described system provides management tools to communication-center administrators for managing and manipulating configuration parameters. For example, a configuration server and configuration manager application is provided and accessible to administrators. The tools use a configuration code library to identify, change and distribute configuration updates throughout the system.

A drawback to this system is that it is mostly internally administered using proprietary code and is platform-dependant. Communication-center administrators access the configuration server through an application program interface from a local area network that is typically Transfer Control Protocol/ Internet Protocol (TCP/IP) enabled. A vehicle that is based on extensible markup language (XML) is available and known to the inventor for transmitting communication-center configuration data from one cooperating communication center to another in the case of multi-site centers. The vehicle is limited however, in that manipulation of data cannot be performed on the fly. Therefore, it is not suitable for third-party integration of center configuration data with other third-party management facilities such as customer-relations management (CRM) applications.

The inventors know of a system for transforming and transmitting communication-center configuration and service data from a communication-center environment to one or more platform-disparate third-party applications over a data network. The system is described in the specification listed as a reference in the background section of this specification. The system includes an intermediate service point connected to the network between communicating parties and a set of application program interfaces for transforming and transmitting communication-center data from the center to the intermediate service point. The system also includes a set of application program interfaces for transmitting the communication-center data from the service point to one or more of the third party applications. In practice of the system, Java-based data is sent to the service point from the center and used for instantiating at least one data model, the model described as an XML document, which is rendered accessible in whole or part to a requesting third-party application or applications according to protocol used by the third-party application or applications.

It has occurred to the inventors that the system described above may also be used for providing remote access to communication center reporting data such as performance data and communication center object status. Therefore, what is clearly needed is a platform-independent, standards-based, and Internet-oriented system and method that enables remote third-party application to have real-time access to communication center object status and reporting data. Such an enhancement would enable seamless reaction of third-party applications to current communication center events.

### Summary of the Invention

In a preferred embodiment of the present invention a system for providing communication-center statistical data to a third party application over a data network is provided, comprising an intermediate service point connected to the network between the communication-center environment and the third-party application, a set of application program interfaces for transforming, transmitting communication-center statistical data from the center to the intermediate service point; and a set of application program interfaces for transmitting the communication-center statistical data from the service point to the third-party application. The system is characterized in that the third-party application accesses the intermediate service point using the network and manipulates one or more services hosted within the service point to configure to receive by subscription statistical data about specific communication-center entities described as objects including real time performance statistics of those entities.

In some preferred embodiments the data network is the Internet network. Also in some preferred embodiments the data network is the Internet network combined with at least one sub-network. In some embodiments the machine-readable language incoming into the service point from the communication-center is Java-based. Also in some embodiments the machine-readable language output from the service point to one or more third-party applications is XML-based.

In some cases the statistical data includes object state data, object performance data, and time-based profile data. Also in some cases the service point is a Web server hosted on the Internet network. Further, in some cases the XML-based data is transported in SOAP-based messages. Still further, the services may be described using WDSL and/or UDDI languages.

In another aspect of the invention, in a system for providing communication-center statistical data to a third party application over a data network, a method for authenticating clients accessing an intermediary service point of the system is provided, comprising steps of (a) receiving a request at the intermediary service point from a client; (b) extracting client-identity data from the initial request to access the server; (c) forwarding the extracted identity data to a naming and directory service for client authentication and receiving confirmation thereof; (d) forwarding the client-identity to an enterprise system server for client authentication for specific services and receiving confirmation thereof; and (e) assigning a security identification to the client for the pending session between the client and the intermediary service point.

In some embodiments of the method, in step (a), the intermediary service point is a Web server and the data network is the Internet network. Also in some embodiments, in step (b), client-identity includes at least one of or a combination of principal name, password, and client system address. The principle name may include application name and user name and the password may include any pre-set data entered in a login process at the intermediary service point.

In some embodiments, in step (c), the naming and directory service is hosted within the communication center. Also in some embodiments, steps (a) through (c) comprise one complete level of authentication for granting access to the intermediary service point. In still other embodiments, in step (d), the enterprise system server is a configuration server hosted within the communication center. Also in (d) the specific services may include a configuration service and a statistical service.

In some cases steps (d) and (e) comprise one complete level of authentication for granting access to specific services hosted within the service point. Further, an additional step (f) may be provided for assigning a reference element to a first request for data initiated during the active session by the client. Subsequent reference elements may be assigned serially to each additional request initiated in the active session. In some embodiments a subscription to receive statistical data may be configured for automated client notification of any change in data.

### Brief Description of the Drawing Figures

- Fig. 1: is an architectural overview of an interface sever for bridging third-party applications to communication-center configuration environment according to an embodiment of the present invention.
- Fig. 2: is an architectural overview of the configuration service of Fig. 1 and network connection between third-party applications and a communication center configuration management environment.
- Fig. 3: is an architectural overview of the internal components of the configuration service of Fig. 1 according to an embodiment of the invention.
- Fig. 4: is a data model example of a configurable component according to an embodiment of the invention.
- Fig. 5: is a block diagram illustrating a third-party interface server and network connections to communication-center resources and to third party applications according to an embodiment of the present invention.
- Fig. 6: is process flow chart illustrating steps for client and server-side interaction according to an embodiment of the invention.
- Fig. 7: is a process flow diagram illustrating steps for interacting with the configuration service of the interface server of Fig. 5 according to an embodiment of the invention.
- Fig. 8: is a process flow diagram illustrating steps for third-party access to statistical information according to an embodiment of the invention.
- Fig. 9: is a process flow diagram illustrating steps for client authentication according to an embodiment of the invention.

### Description of the Preferred Embodiments

According to a preferred embodiment of the present invention, the inventor provides a method and apparatus for enabling platform-independent data access to communication center configuration data for use by third-party applications. The methods and apparatus of the invention are described in detail below.

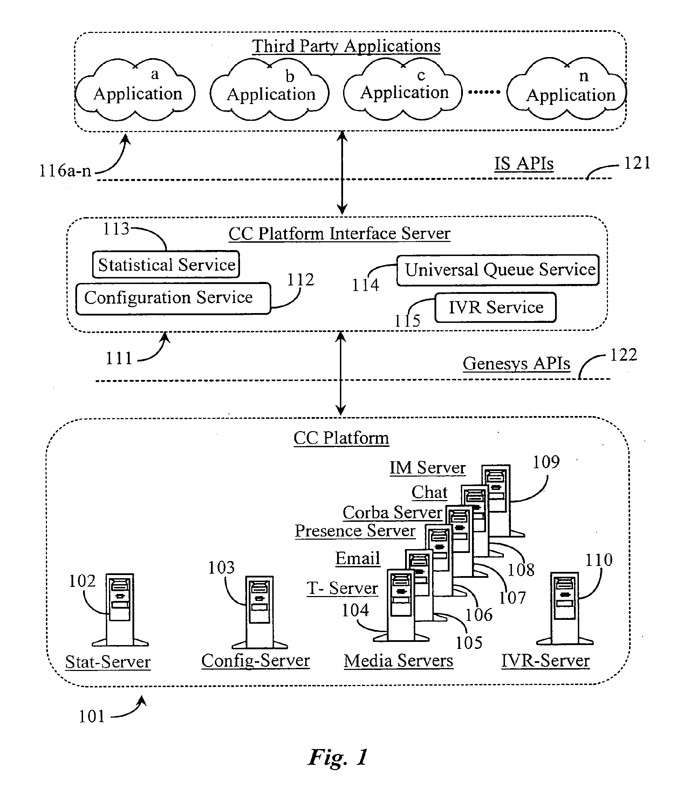

Fig. 1 is an architectural overview of an interface sever 111 for bridging third-party applications 116 a-n to communication-center configuration environment 101 according to an embodiment of the present invention. Communications-center platform 101 is a state-of-art object-oriented platform that is enabled by a rather complex data-model that can change dynamically in terms of attributes of the model. Platform capabilities equate, essentially to available services made possible through provision of equipment and software that enable a state-of-art communication-center environment.

Platform 101 includes a plurality of media-based interaction services illustrated as a plurality of media servers. For example, a transaction server T-Server 104 serves intelligent routing routines including queuing protocols and the like. T-server 104 operates according to communication center rules and may initiate routing routines based on a wide variety of conditions and available data. For example, agent-level routing may be performed based on agent availability, agent skill level, statistical conditions, call load conditions, and combinations thereof. T-server 104 forms the heart of center service in terms of efficient routing of all media type interactions. Although not illustrated in this embodiment, T-server 104 also handles all connection-oriented switched network (COST) interaction routing.

An e-mail server 105 is illustrated in this example and provides a central routing point for all incoming and outgoing e-mails, and video mails. A presence server 106 is illustrated in this example and is adapted to report presence information on all agent or system destinations that may be involved in interaction events. A chat server 108 is illustrated in this example and is adapted as a central server for hosting scheduled and impromptu chat sessions party to clients and typically hosted by one or more dedicated service agents. An instant message (IM) server 109 is illustrated in this example and is adapted for brokering instant messages between agents in the center and in some cases, between agents and connected clients. A Corba server 107 provides the middleware components required to translate relational data to object-oriented entities and reverse order in an object-oriented telecommunications system environment.

The media server types illustrated in this embodiment should not be collectively quantified as a limitation of services available from within platform 101 as there may be additional services provided without departing from the spirit and scope of the invention. The inventor intends to demonstrate only an exemplary list of the types of services available in a state-of-art communications center environment.

A statistics server (Stat-Server) 102 is illustrated within platform 101 and is adapted to server various and sundry statistical information for aid in better routing and CC performance evaluation. An interactive-voice-response server (IVR-Server) 110 is illustrated in this example and provides control for point-to-point automated interaction with clients both in a computer-telephony-integrated (CTI) COST sense and in an Internet-protocol-network-telephony (IPNT) sense provided that platform 101 is a dual-capable platform (handles COST and DNT interaction). A configuration server 103 is illustrated in this example and is adapted to store and provide configuration data for all systems and entities including software that are utilized within the domain of platform 101.

It is assumed in this example, that all servers represented within the domain of platform 101 are interconnected for communication and data access by at least an internal local-area-network (LAN) that also connects agents and administrators for communication and data access. It is also assumed that the domain of platform 101 is not strictly limited in a physical sense as some servers described above may be distributed singularly or in plural to network-level points outside of a communication center.

As was described with reference to the background section, there are a relative large number of configuration parameters relating to equipment, software and services of platform 101 that must be managed and updated to provide continual and optimal function of the center as a whole. As center capabilities and services are upgraded and, perhaps added to the system, configuration parameters related to those changes must be saved and stored for later access. If a center-host has multiple center locations, then the configuration data for center equipment and services must be duplicated in part or in whole and distributed to sister sites for implementation. In current art, this assumes that same equipment types, connection types, and software are used at all of the cooperating sites. Furthermore, in the time that it takes to configure multiple sites for active service, original configuration data elements may have been modified, upgraded, replaced with other configuration data and so on. Because current data synchronization implements are proprietary and are built around a common platform, third-party applications and systems that operate according to variant platforms are excluded from participation.

In order to solve the described limitations of same-platform, proprietary data synchronization vehicles, the inventors provide a unique communication-center platform-interface server 111. Server 111 uses a variety of accepted and standard descriptive languages to promote data access and synchronization capabilities to third-party applications 116a-n that may not be based on the same platform or even use the same system components or software. Platform interface server 111 makes current configuration data and center related data available on request or, in some embodiments, following a data push model.

Platform interface server 111 communicates with the communication center platform through one or more application program interfaces (APIs) 122. Server 111, in a preferred embodiment is hosted on the Internet network in the form of a universal Web-service accessible to all authorized parties. In another embodiment, server 111 may be held internal to platform 101 and accessible through a private network. In still another embodiment, server 111, or a version thereof, may be provided as a CTI-service control point (SCP) in a COST network such as the public-switched-telephony-network.

The main responsibility of interface server 111 is to take in all applicable data from the communication center environment and transform the data into standard descriptive language that can be understood and utilized by a variety of third party systems and applications.
Server 111 contains a configuration service 112 for relaying critical configuration data for the purpose of enabling third-party applications 116a-n to configure their sites and systems for interaction with the communication center platform and to operate in a whole or limited fashion as the original communication center would. Server 111 also provides a statistics service 113 that renders current statistics related to performance, load balancing, and other types of functions generic to the host platform available to third-party applications 116. Server 111 offers a universal queue service 114 adapted to provide optimum queuing services and configuration to applications 116a-n. Server 111 also provides an IVR service that can be used by applications 116a-n to interact with their clients.

Applications 116a-n comprise exemplary third-party telecommunications applications. Applications may consist of DNT telephony applications, CTI applications, CRM applications, and so on. It is assumed in this example, that applications 116a-n are known to the inventor and that application program interfaces have been developed that enable them to use the present invention successfully. Third-party applications communicate with interface server 111 using APIs such as Interface Server (IS) APIs 121.

In one embodiment of the present invention, APIs 121 are actually hosted within platform interface server 111. In this case, a particular third-party application 116a, for example, can select the appropriate interface from a menu provided by server 111. In another embodiment, IS APIs 121 are plug-in client modules that can be distributed to third parties or downloaded from the site by third parties.
Third-party applications 116a-n may utilize any required portion of available configuration data and services offered through server 111. For example, a COST only communication center running a variant platform may only require queuing services. In that case, only queuing service data is provided to that particular application.

Server 111 transforms the data itself from communication center platform code to one of a variety of universal and standard descriptive languages. Through API 121, or within server 111 itself, the universal language is then transformed into code applicable to the requesting platform for implementation according to its existing data model.
In this way, a third party can implement queue services, for example, that are operated and function according to the common parameters or attributes of both platforms. A requesting platform may not utilize all of the capabilities of service 114 or any other offered service for that matter if the constraints of the equipment supported by the platform are limited. However, the service can be acquired and installed relative to all of the functions that are feasible.

After a third-party application is configured and is using one or more service offered through server 111, then configuration updates can be pushed to the third party as they become existent. Likewise, a third party application can be notified of existing updates and then connect to server 111 for automated synchronization wherein the updates are downloaded and automatically installed. Relatively complex data models, one belonging to the host communication center platform and one belonging to the requesting third party application can be rendered in the same universal descriptive language wherein the likenesses of the models and the differences of the models can be isolated to determine what if any available services can be effectively provided to and configured to the requesting application. There are many possibilities.

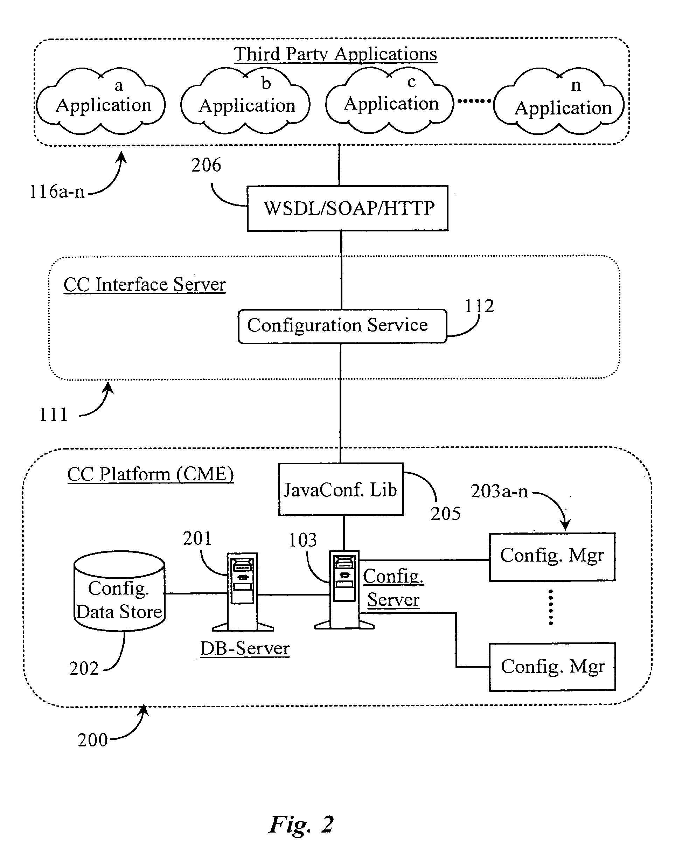

Fig. 2 is an architectural overview of the configuration server 111 of Fig. 1 and network connection between third-party applications 116 and a communication center platform configuration management environment (CME) 200. CME 200 is part of the communication center platform 101 described with reference to Fig. 1. It is the part that enables configuration management of all servers, processors, software, switches, interfaces, and other like components that make up a telephony communication center system.

CME 200 comprises configuration server 103 described previously with regard to the example of Fig.1 and supporting components including configuration manager applications 203a-n, a configuration database repository 202, a database server 201, and a Java configuration library 205.

An instance of configuration manager 203a-n exists for each communication center entity that requires configuration and configuration management services. Instances 203a-n are part of a same extendable program wherein new configuration manager instances can be spawned as required. Configuration manager is installed and executable within server 103 is a preferred embodiment. Server 103 is supported by a repository 202 that contains all of the most current configuration data values for all configurable entities within the CC platform. Database server 201, running database software (not shown) communicates with server 103 to provide data access and update capability of repository 202, such activity performed by server 103.

Server 103 also has access to a Java Configuration Library (JavaConf. Lib.) 205, for the purpose of translating configuration data into Java-based messaging including self executables (beans). Server 111 requests information pertaining to configuration data from server 103 as a result of a request from one of applications 116a-n.
Server 111 is an intermediate server that links third-party applications 116a-n to configuration server 103. As previously described, server 111 is in a preferred embodiment, a Web server that may be accessed by third-party applications 116a-n.

Server 111 uses a communication protocol stack 206 that enables Web-Service Description-Language (WSDL), Simple-Object-Access-Protocol (SOAP) messaging, Hyper-Text-Transfer-Protocol (HTTP), and Universal Description, Discovery and Integration UDDI, which are all standard and accepted Web-based protocols. In particular application, communication center configuration data transferred to server 111 from server 103 is presented, in a preferred embodiment as a Web service or as a set of Web services (configuration service 112). Server 111 may use a proprietary data interface to communicate with server 103 while applications 116a-n communicate with server 111 via a secure socket layer (SSL) connection over the Internet for example.

From the point of view of applications 116a-n, the entire configuration of the host communication center platform is presented as an XML document transported using SOAP and HTTP. In a preferred embodiment, the XML-based protocol facilitates reading, updating, and monitoring changes in the XML (configuration) document, for example, values of configuration elements and attributes. The protocol enables manipulation of different elements without changing the whole document (configuration) and also notifying any client application 116a-n about current changes in the XML configuration document, hence changes in configuration data. It is important to note herein that the scope of access to an entire configuration document depends on the nature and scope of the requesting application. In many cases only specific parts of the entire configuration document apply. WDSL and UDDI are languages defining the service structure and enabling identification of service parts or sub-services.

Platform 200 is illustrated in this example as the compilation of components that are relative to configuration service 112. For example, configuration server 103 has instances 209a-n of configuration manager modules. It is assumed in the example that there is a configuration manager for each configurable components of the CC environment. In practice, configuration service 112 facilitates manipulation of configuration manager instances 209a-n utilizing a Java configuration library (JavaConf. Lib) 205. Library 205 contains all of the required Java code to facilitate transport of any configuration data results accessed through configuration service 112.

A configuration database repository 202 is provided to store all of the current configuration elements of the entire communication center platform. A database server 201 is provided having access to repository 202 for serving any requested configuration data, and for storing new configuration data into repository 202 if authorized. In practice of the invention, one or more of applications gain access using Internet protocol (typically request response) to interface sever 111 and configuration service 112, which may include sub-services. Access is controlled through in terms of security through SSL or other applicable regimens. Interface server 111, as a proxy, accesses configuration server 103 through a proprietary interface using Java transport mechanisms and protocols. Result data is transformed from Java to an appropriate protocol for ready implementation at a requesting application site.

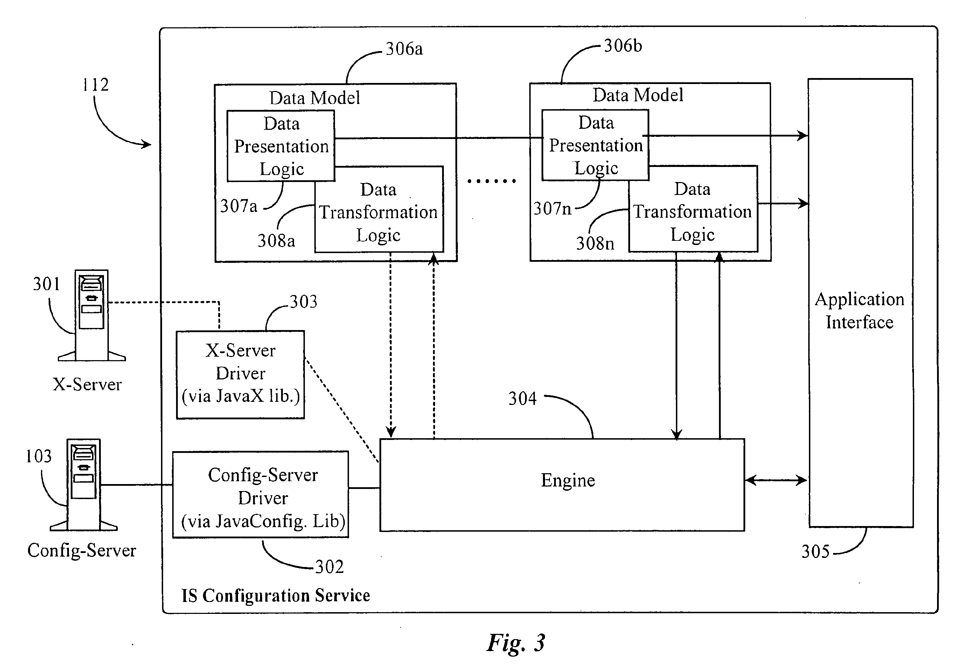

Fig. 3 is an architectural overview of the internal components of the configuration service 112 of Fig. 1 according to an embodiment of the invention. Service 112 presents options to requesting users through an application interface 305. Application interface 305 includes protocol stack 206 described with reference to Fig. 2. Interface 305 functions as an interface for a configuration "wizard" in a preferred embodiment. That is to say the requesting clients operating, for example, through a Web server are presented with a configuration wizard, which would be analogous to configuration service 112 as a whole. Interface 305 is responsible for interface with third party applications 116a-n described with reference to Fig. 2. More particularly, engine 305 parses and generates XML messages and facilitates their transmission via SOAP/HTTP protocol stack 206.

Engine 304 has direct access to configuration server 103 and related components described with reference to Fig. 2 using a configuration server driver 303 that communicates with server 103 through Java library 205 described with reference to Fig. 2. An X-server 301 is illustrated in this example and is adapted to serve pre-selected services such as IVR, queue and statistical services described with reference to Fig. 1 above. X-server 301 is a logical implementation of all of the media servers described with reference to Fig. 1 and communicates with engine 304 using one or more X-server drivers 303 that utilize a JavaX library for code.

Engine 304 is responsible for generation of accurate and up-to-date data models illustrated herein as models 306a and 306n for presenting model-dependant data. Data models 306a through n are exemplary of portions of or entire configuration data models that may be required to full fill third-party requests.

Within each data model 306a-n there are data presentation logic modules 307a-n adapted to present object representative data to third-party applications. Each data model 306a-n also has data transformation modules 308a-n adapted to provide the required transformations into descriptive languages used by third-party applications.

All data model dependant processing as well as all data independent model processing occurs within engine 304. The external representations of data models 306a-n and accompanying modules for presentation and transformation are logically illustrated in this example for explanative purpose only. In practice, it is possible that a configuration data model will contain many object that represent actual communication center entities. Because objects have elements and attributes, a complex network structure emerges wherein several data models share configurable elements and attributes.

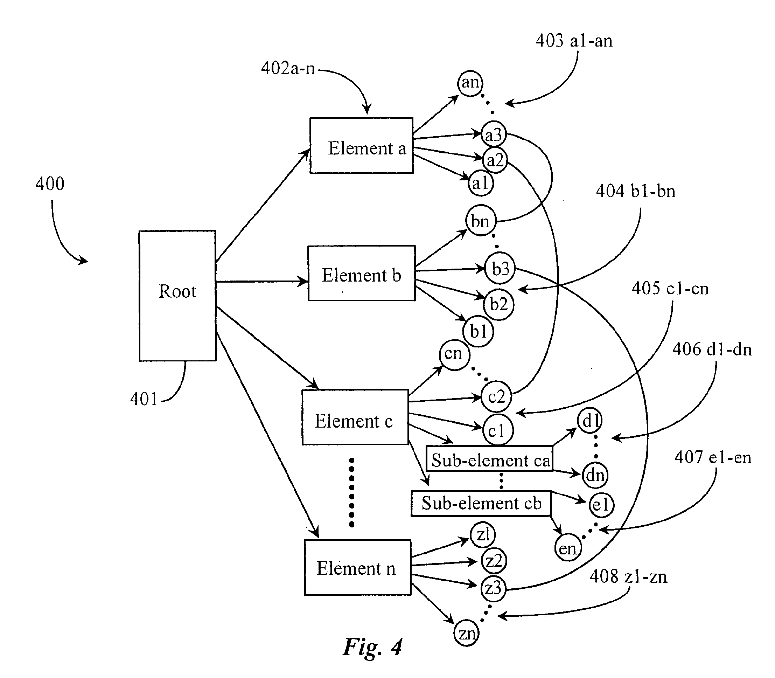

Fig. 4 is a block diagram illustrating an exemplary data model 400 of configurable communication-center elements according to an embodiment of the present invention. Data model 400 is analogous to data models 306a-n described with reference to Fig. 3 above. Model 400 has a root element 401, which is the abstract root of the model. Root 401 may be the entire communication center itself or it may be a portion of the center in a case where only a portion of a data model is required by a third party. Therefore, the term root as applied in this specification implies the main element of the portion of data model presented to a third party.

Root 401 has a plurality of configurable elements 402a-n. Elements 402a-n may represent a wide variety of communication-center objects. Elements 402a-n have attributes. For example, element 402a has attributes 403 al-an. Element 402b has attributes 404 bl-bn. Element 402c has attributes 405cl-cn as well as configurable sub-elements, sub-element ca and sub-element cb. Element 402n has attributes 408 zl-zn. Sub-element ca has attributes 406 dl-dn, and sub-element cb has attributes 407 el-en.

It will be appreciated by one with skill in the art of object modeling that there may, in practice, be many more configurable elements, sub-elements and attributes present and represented in an exemplary model than are illustrated in this example without departing from the spirit and scope of the present invention. The inventor shows modest numbers of elements, sub-elements and attributes for the purpose of simplicity in explanation only.

In object modeling it is known and accepted that there may be more than one sub-element and attribute that occurs in model instantiation wherein the sub-elements and /or attributes are common to more than one configurable element. For example, if root 401 is an agent group and elements 402a-n are current agents logged into the agent group, then attributes of the agents may represent individual agent skills. In this case agent 402a has a skill attribute 403 a3 that is identical to an attribute of agent 402b, namely attribute 404 bn. Following this logic, agent 402a also has an attribute in common with agent 402c (a2, c2). Likewise, agent 402b has an attribute in common with agent 402n (b3, z3). Therefore, a query using W3C accepted Xpath mechanism may be initiated to find the element b having an attribute equal to, for example, attribute z3 of element n. Then the expression would be/B[@b3=/N [@z3]].

In another example, a third-party may want to read configuration data relevant to one of configurable elements 402a-n, which are in this case agents. If the agent has a name John Smith, then an expression using Xpath would read/person[@LastName="Smith"and@FirstName="John"and @is Agent="1"].

Third-party applications can access communication center configuration data related to a whole of or a portion of a communication center data model. Since a communication center data model has attributes that evolve and change periodically, a third-party application may pre-set to be notified of any specific changes in specific portions of the model that are relevant to the application. For example, if a third-party application wishes to be notified the next time that an outbound call campaign is initiated within the center then it can preset to receive configuration data relative to the campaign including participating agents, switches, servers, and agent attributes including call lists, called numbers, and client identifications. In this case, the third-party application could be a CRM application designed for after care of the target clients solicited by the specific agents involved in the campaign. The desired attributes required by the third party may be the agent call lists, statistics data for each agent hit ratio, percentage of sales per list, and so on. There are many possibilities.

The methods and apparatus of the present invention can be used in a variety of communication-center environments including CTI-COST centers and DNT-capable centers. The present invention can be practiced over a variety of data networks including the Internet network wherein access to configuration data is presented in the form of a Web service or service-set. Other methods for presentation of data to third-party interfaces are also possible. For example, IVR rendition may be used over a COST connection. Wireless Markup Language can be used with a digital cellular telephone or other wireless network device. Third-party thin-client applications and robust third-party mainframe systems alike can benefit from the methods and apparatus of the present invention.

### Transferring Real-Time Object and Performance Data

In one aspect of the present invention, the system described in Figs. 1-4 is used to provide object status and performance data in real-time to requesting third-party applications.

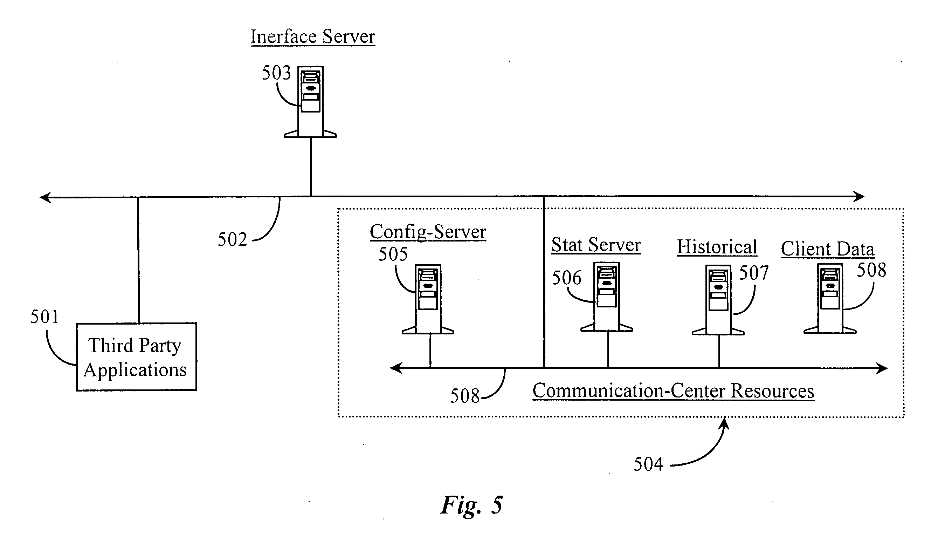

Fig. 5 is a block diagram illustrating a third-party interface server 503 and network connections to communication-center resources 504 and to third party applications 501 according to an embodiment of the present invention. Interface server 503 is analogous to interface server 111 of Fig. 1 above. All of the services 112-115 described with reference to Fig. 1 may be assumed to be present in server 503. Server 503 is, in a preferred embodiment, is hosted on the well-known Internet network. However, this should not be construed as a limitation to the practice of the present invention, as other DPNs can be used to host server 503. Server 503 is illustrated as connected to an Internet backbone 502. Backbone 502 represents all of the lines, equipment and connection points that make up the Internet network as a whole. Therefore, there are no geographic limitations to the practice of the invention.

Interface server 503 presents a set of interactive Web services that are accessible through Internet connection and navigation to server 503. Third-party applications 501 have access to services presented within server 503 through Internet connection. Interface server 503 has application program interfaces installed therein analogous to IS APIs 121 of Fig. 1. The APIs enable various third-party applications 501, which may include CRM systems, thin client applications, etc. to have access to Web services of 503 in a secure manner over Internet backbone 502.

Communication-center resources 504 include, but are not limited to a configuration server 505 adapted to serve configuration data, a historical database server 507 adapted to serve history-based data, a statistics server 506 adapted to serve performance-related data, and a client database server 508 adapted to serve client-related data. Interface server 503 has a set of application interfaces analogous to APIs 122 of Fig. 1. APIs 122 are proprietary in nature, are Java-based in a preferred embodiment, and are adapted to transform communication center data into XML-based description used to render models reflecting the communication-center environment. This is accomplished using the previously described processing engine 304.

It is noted herein that communication-center resources may be provided through legacy services using one or more than one legacy system adapted to use a variety of servers and interfaces that may be designed for certain data-types.
The inventor illustrates separate machine icons as servers for explanative reason only. The described servers may, in one embodiment, all be hosted on a single machine. As a Web-service host, server 503 in a preferred embodiment is a secure server with identification, authentication and other secure protocols in place. SSL and other standard Web security regimens can be used in combination to provide various levels of security for accessing server 503 from remote third-party applications 501.

An important goal of the present invention is to provide access to CC reporting data. Such access in this example may be a Web service for providing reporting information that would use proven Internet standards such as SOAP, WSDL, UDDI, and HTTP. Server 503 accesses at least configuration server 505 for configuration data and stat server 506 for reportable communication-center data.
Third-party applications communicate with server 503 according to a specially designed XML-based protocol. Client/server interaction according to XML-based protocol is described further below.

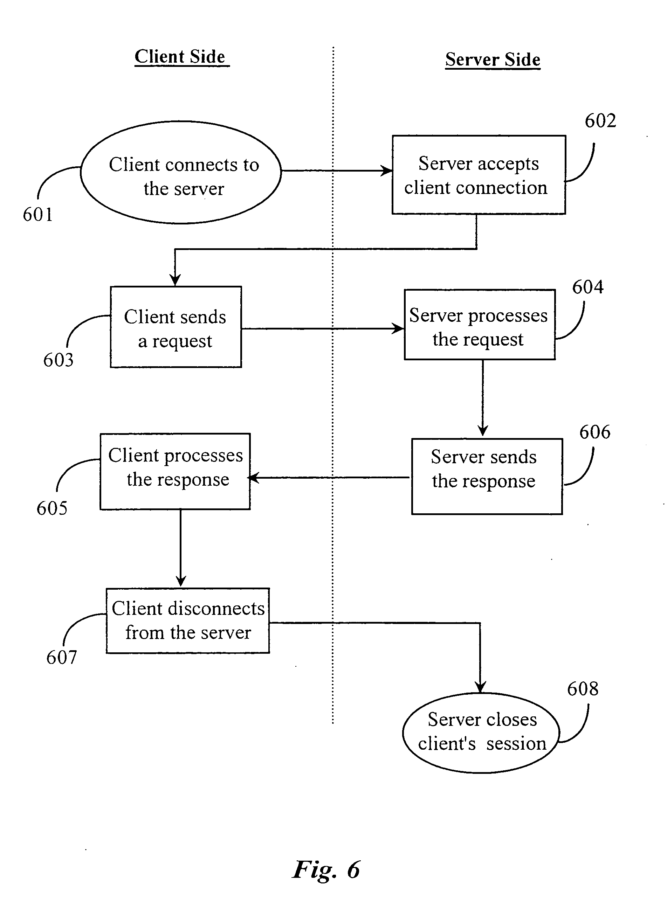

Fig. 6 is a process flow chart illustrating steps for client and server-side interaction according to an embodiment of the invention. In a preferred application of Web-service access as described above, a client first connects to server (503) in step 601. Access may be initiated from any remote Internet-capable device.

Access involves an XML-based protocol for requesting and retrieving CC real-time statistical information, for example. The protocol enables specification of the type of CC statistical information requested by use of predefined metrics and customized metrics. It also enables specification of scheduled information retrieval. Using the XML-based protocol the system enables delivery of statistics data about CC objects, their status, and performance data. Additionally, the system could notify third-party applications (501) about most-recent changes of the CC objects and their status. At step 602 the server accepts the connection initiated by a client in step 601. Acceptance may, in preferred embodiments, include client-identification and authentication services. SSL transport or other security protocol may also be used for secure connection. At step 603 the client, after being cleared to use services hosted by the server, sends a request to the server. The request is sent as a result of interaction with one of the Web-services hosted in the server. At step 604 the interface server processes the client request. In step 604 the interface server taps the appropriate communication-center resources analogous to resources 504 of Fig. 5. More particularly, the server connects to a configuration server to access configuration data, or to a statistics server to capture most recent statistical data such as object performance data including most recent status.

At step 605 the interface server delivers a response to the requesting client. The response is in the form of a (data) language understood at the client. For example, Java-based data is retrieved from communication-center resources.
That data is rendered as a data model described in XML.
The API between the client and the interface server handles transfer of the XML data as XML data or in any other markup language that may be required at the client end.

At step 606 the client receives and processes the response from the interface server sent in step 605. Processing the response includes display and any calculation that may be designed at the client end. At step 607 the client disconnects from the interface server. Disconnect involves a client logout action. At step 608 the interface server receives the logout request from the client and closes the active session.

A client request has a reference element that is returned with the response. The reference element uniquely identifies each request and associates appropriate responses. If there is more than one request in a session for example, each request is uniquely identified. There are many ways to accomplish this task. One such method is random serial identification, which would occur each time a request is received. In one embodiment a request may be cancelled en-route. This embodiment assumes that an acknowledgement of the received request is immediately returned to the client with the reference element. In a cancel action, the client would specify the reference element along with the cancellation request thereby identifying which active request will be cancelled. Requests must be cancelled one at a time using the unique reference elements with each cancellation request. One reference element cannot be used to cancel more than one active request in an active session.

In a preferred embodiment, request processing is possible only after the particular request has been successfully authorized according to enterprise rules. For example, the interface server must first confirm that the request from the user is answerable according to the request parameters. In this way a general request such as retrieve "current status" will cause the statistics server, for example, to deny the request because there are no specific parameters. This provides a flexible way to control available functionality for any particular client.

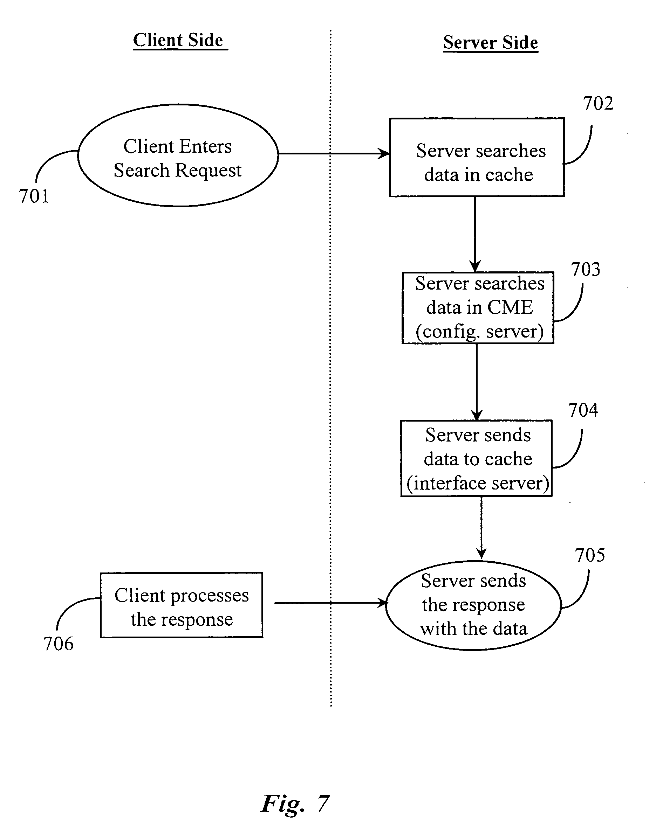

Fig. 7 is a process flow diagram illustrating steps for interacting with the configuration service of server 503 of Fig. 5 according to an embodiment of the invention. To access the configuration service of server 503 a client connects to the interface server as described above with reference to Fig. 6. The client then enters a search request at step 701. It is assumed that the client, in this case, has been authenticated at the server and cleared to use the configuration service. The configuration service is analogous to service 112 of Fig. 1 above.

The configuration service taps into communication-center CME (introduced further above) as a resource for configuration data. A configuration server analogous to server 505 of Fig. 5 serves the data. The configuration service has only one pre-set request (RetrieveConfiguration). At step 701 then, a RetrieveConfiguration request includes search parameters equating to configuration criterion.

At step 702 the interface server first searches its data cache according to the criterion sent in the request of step 701. If the most recent data requested is already in cache then it is sent along with a response. However, this example assumes that the required data is not available in local cache. At step 703 the interface server searches for the data in CME, which is part of the configuration server (505) described with reference to Fig. 5. Data found in the CME is returned to the interface server in step 704 in Directory-Services-Markup-Language (DSML) format. DSML is an XML application that provides a method for expressing directory queries, updates, and the results of these operations. The result is a naming and directory service (NDS) described in XML. The configuration service provides mapping of CME to a hierarchical structure in terms of NDS.

At step 705 the interface server sends the final response along with the configuration data to the client over a secure Web connection. At step 706 the client processes the response. An example of a simple configuration request would be to retrieve the specific configuration of a type of telephony switch. The search parameters would be the criterion surrounding the switch such as type, model, number of ports, and so on. It is important to note herein that a configuration data model for the entire communication-center environment is achievable with a single request however, in typical application only required portions of the data model or perhaps updates would be generated within interface server 505 according to the specific needs of the specific third-party application.

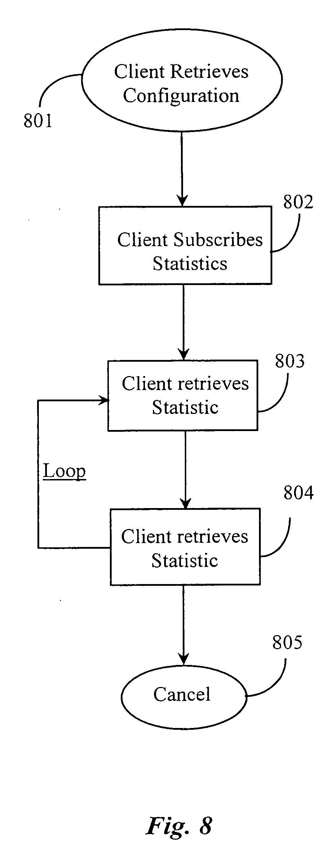

Fig. 8 is a process flow diagram illustrating steps for third-party access to statistical information according to an embodiment of the invention. A statistical service is also provided within interface server 503 of Fig. 5 and is described also with reference to service 113 of Fig. 1. The statistical service taps, as a resource, a statistics server analogous to server 506 described with reference to Fig. 5 above. Available options include being able to subscribe to receive statistics; being able to retrieve statistics on demand; and being able to retrieve statistical profiles such as time-line profiles and so on. The actual requests read SubscribeStatistics, RetrieveStatistics, and RetrieveProfile.

To retrieve one or more statistics on a subscription basis a client first retrieves a basic configuration in step 801. The configuration of step 801 determines how statistics will be delivered according to request criterion. In step 802 the client subscribes to receive statistics according to the current established configuration parameters. At step 803 the client receives a statistic. At step 804 the client receives a next statistic, which may be an update or a change in the previously received statistic. Steps 803 and 804 are continuously repeated during a session until in step 805 the client logs off or cancels the next statistic transaction.

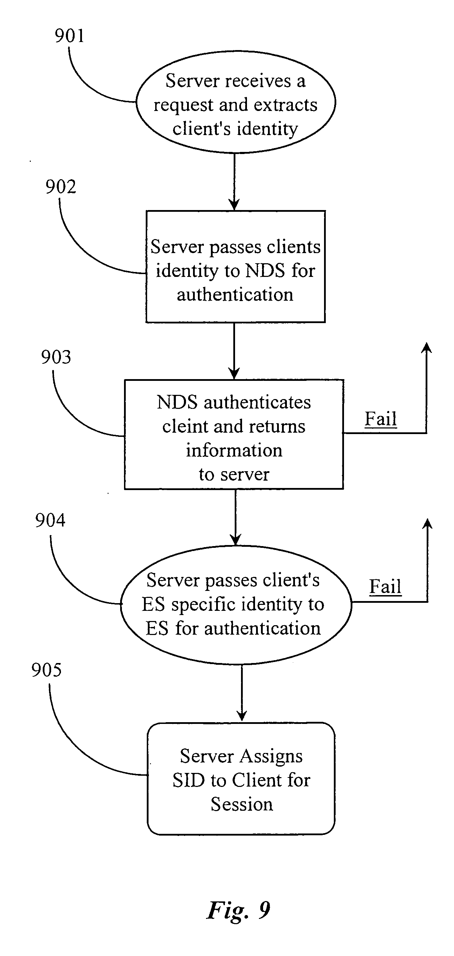

Fig. 9 is a process flow diagram illustrating steps for client authentication according to an embodiment of the invention. In a preferred embodiment, all clients are authorized and cleared to use the services provided by interface server 503 of Fig. 5. As previously described, clients gain access to server 503 over a secure public Web connection while resources are accessed by server 503 over a proprietary data link.

The interface server performs client-request authentication services using the identity parameter referred to above as a reference element that is mandatory for and uniquely identifies any request. The inventor terms this authentication process "Server Authentication". Sever authentication provides login services and permission to submit requests for services. The interface server, in preferred application, also authenticates a client in terms of an enterprise system (ES) authentication that authorizes the client to use ES features such as the particular services. The two authentication procedures are, in a preferred embodiment, distinguished from one another. However, separating the authentication procedures as described should not be construed as a limitation as they can, in some embodiments, be combined as a single procedure.

In step 901 an interfacing server analogous to server 503 of Fig. 5 receives a request for services and extracts the client identity from the request. If the client requires authentication (optional) then the interface server initiates an authentication procedure. In step 902 the interface server passes the client identity to NDS for authentication. NDS is managed in the domain of the communication-center resources and is part of CME.

In step 903 NDS checks authenticity of the identified client and assuming success passes the information back to the interface server. Now the client is authorized to use the interface server and to submit requests. In step 904 the interface server passes the client ES-specific identity to the ES for authentication. The enterprise system (ES) by definition equates to the domain of services and includes all configurable services. If the client is authorized to use the services in step 904, then the interface server assigns a special security identifier (SID) to the client in step 905. The SID assignment is, in a preferred embodiment, only active for a single session conducted between the client and the interface server. For example, if there is a server time-out breeched, then the client must be re-authenticated.

The steps described above are those of a two-level authentication procedure. The first level is server authentication that allows the client to use the server for particular requests and the second level is ES authentication that allows the client use the system. The ES security is based on CME resources. The interface server may, in some embodiments, be configured to skip server authentication, ES authentication, or both. Also, ES identity for the user may be kept in the NDS and retrieved from the NDS after successful authentication. This approach provides a very flexible way to configure security for the ES and in case of integration with CRM, permits a single login with different identities established for different ES instances.

Security is provided on the publicly accessible side of the system, by using SSL on transport layer and/or encrypting elements of the request/response using a public key.
Client identity is established by a combination of three basic elements. These are principal name of client (user name, application name), entered credentials (password), and client system address, for example, http://www.client.com.

Each resource is an application in the ES that is tapped by the interface server between the client and the ES. Distinct resources include but are not limited to the configuration server (CfgServer), statistics server (StatServer), and transaction server (T-Server) server hosted in the communication-center domain. The exact types and availability of services depends in part on the makeup of the enterprise system hosting'the interface server. The exact resources are specified upfront with a client request such as a request for configuration and statistical services.

There re many ways to determine which particular servers will be available to a particular client. For example, in CME a single server can be assigned for a particular application. The application name can be specified as part of the client ID, or in NDS for the particular client. Determination of which particular statistical server to use in the case of more than one is provided through the configuration service. In one embodiment a client may be configured to use more than one server but the client may specify which server to use in a request.

To reference a particular resource within the communication domain (enterprise system), a universal resource indicator (URI) may be used. For example, to reference a statistics server number 1, the following exemplary address may be used:

### http://www.communicationcenter.com/statistics#StatServerl.

An optional set of URI resources may be specified in any service request as a resource parameter. In one embodiment NDS can be used to register a URL of a server. In this case, any client can access it. Requests may comprise exemplary actions such as:
- Login to an interfacing server for authentication to conduct the pending session.
- Logout from the interfacing server to end an active session.
- Cancel to terminate an active request already in the interfacing server and return acknowledgement of cancellation specific to each request.

More specific command requests include:
- RetrieveConfiguration
- SubscribeStatistics
- RetrieveSubscribedStatistics to retrieve a current value of subscribed statistics or of a subscribed single statistic.
- RetrieveStatistics to retrieve the current value of a specified statistic or statistics
- RetrieveStatisticalProfile

The method and apparatus of the present invention provides access to pertinent statistical data pertaining to virtually any facet of communication-center state and operation. A variety of third-party applications such as plug in software modules, thin client applications and even automated robust systems can benefit from having real-time access to configuration and statistical information.
One with skill in the art will appreciate that there are a variety of network types and implementation that can be utilized to practice the invention beside the Internet. Private networks, Ethernets, Intranets, and LANs can be adapted for practice of the invention. Combinations of the above-described networks may also be used to practice the invention.

The methods and apparatus of the present invention should be afforded the broadest scope under examination. The spirit and scope of the present invention shall be limited only by the following claims.

## Claims

1. A system for providing communication-center statistical data to a third party application over a data network comprising:
an intermediate service point connected to the network between the communication-center environment and the third-party application;
a set of application program interfaces for transforming and
transmitting communication-center statistical data from the center to the intermediate service point; and a set of application program interfaces for transmitting the communication-center statistical data from the service point to the third-party application;
**characterized in that** the third-party application accesses the intermediate service point using the network and manipulates one or more services hosted within the service point to configure to receive by subscription statistical data about specific communication-center entities described as objects including real time performance statistics of those entities.

2. The system of claim 1 wherein the data network is he Internet network.

3. The system of claim 1 wherein the data network is the Internet network combined with at least one sub-network.

4. The system of claim 1 wherein the machine-readable language incoming into the service point from the communication-center is Java-based.

5. The system of claim 1 wherein the machine-readable language output from the service point to one or more third-party applications is XML-based.

6. The system of claim 1 wherein the statistical data includes object state data, object performance data, and time-based profile data.

7. The system of claim 1 wherein the service point is a Web server hosted on the Internet network.

8. The system of claim 5 wherein the XML-based data is transported in SOAP-based messages.

9. The system of claim 7 wherein the services are described using WDSL and/or UDDI languages.

10. In a system for providing communication-center statistical data to a third party application over a data network, a method for authenticating clients accessing an intermediary service point of the system comprising steps of:
(a) receiving a request at the intermediary service point from a client;
(b) extracting client-identity data from the initial request to access the server;
(c) forwarding the extracted identity data to a naming and directory service for client authentication and receiving confirmation thereof;
(d) forwarding the client-identity to an enterprise system server for client authentication for specific services and receiving confirmation thereof; and
(e) assigning a security identification to the client for the pending session between the client and the intermediary service point.

11. The method of claim 10 wherein in step (a) the intermediary service point is a Web server and the data network is the Internet network.

12. The method of claim 10 wherein in step (b) client-identity includes at least one of or a combination of principal name, password, and client system address.

13. The method of claim 12 wherein principle name includes application name and user name and wherein the password includes any pre-set data entered in a login process at the intermediary service point.

14. The method of claim 10 wherein in step (c) the naming and directory service is hosted within the communication center.

15. The method of claim 10 wherein steps (a) through (c) comprise one complete level of authentication for granting access to the intermediary service point.

16. The method of claim 10 wherein in step (d) the enterprise system server is a configuration server hosted within the communication center.

17. The method of claim 10 wherein in step (d) the specific services include a configuration service and a statistical service.

18. The method of claim 10 wherein steps (d) and (e) comprise one complete level of authentication for granting access to specific services hosted within the service point.

19. The method of claim 10 wherein an additional step (f) is provided for assigning a reference element to a first request for data initiated during the active session by the client.

20. The method of claim 19 wherein subsequent reference elements are assigned serially to each additional request initiated in the active session.

21. The system of claim 1 wherein a subscription to receive statistical data is configured for automated client notification of any change in data.
